# EUROPÄISCHE PATENTSCHRIFT

(11) **EP 1 133 910 B1**
(45) Veröffentlichungstag und Bekanntmachung des Hinweises auf die Patenterteilung: **15.11.2006**
(21) Anmeldenummer: 01102648.1
(22) Anmeldetag: 07.02.2001
(51) Int. Cl.: A01D 34/73

(54) **Lagerschild eines Mähtellers**
Shield of mower disc
Bouclier d'un disque rotatif faucheur

(30) Priorität: 14.03.2000 US 525638
(43) Veröffentlichungstag der Anmeldung: 19.09.2001
(73) Patentinhaber: DEERE & COMPANY, Moline, Illinois 61265-8098 (US)
(72) Erfinder: Mellin, Michael James, 70100 Esmoulins (FR); Petersen, John Gregory, Ottumwa, IA 52501 (US); Verhulst, Michael Joseph, Ottumwa, IA 52501 (US)
(74) Vertreter: Magin, Ludwig Bernhard

(56) Entgegenhaltungen:
- EP-A- 0 157 453
- EP-A- 0 887 006
- EP-A- 0 891 693
- FR-A- 2 072 365
- FR-A- 2 756 135
- US-A- 5 884 461

## Beschreibung

Die Erfindung betrifft einen Lagerschild eines Mähtellers mit einem Boden und einer mit diesem verbundenen aufrechten Wandung, wobei der Boden eine Öffnung zur Aufnahme einer Schraube aufweist und die Wandung eine Ausnehmung begrenzt, sowie einen Mähteller selbst.

Die US-A-5,845,468 offenbart einen Mähteller von ovaler Form, an dem an den Schmalseiten jeweils ein Mähmesser in einem Lagerschild angebracht ist. Im Aufnahmebereich des Lagerschilds ist der Mähteller ausgeschnitten, so daß der aufgesetzte Lagerschild in seiner Lage gesichert ist. Der Lagerschild weist eine zylindrische rundum geschlossene Ausnehmung auf, in der die Mutter einer Schraube zum Befestigen des Mähmessers geschützt aufgenommen ist.

Aus der US-A-5,842,330 geht ein Mähteller gleicher Form hervor, der im Aufnahmebereich der Schraube einen ringförmigen Rand zum Schutz der Mutter aufweist, dem ein Leitwinkel schräg zur Radialen des Mähtellers benachbart ist, der in der Arbeitsrichtung dem Rand voreilt.

Das der Erfindung zugrunde liegende Problem wird darin gesehen, daß die gewählten Mittel zum Schützen der Mutter und zum Leiten des Guts relativ hohe Herstellungskosten verursachen und anfällig sind gegen Schmutz.

Dieses Problem wird erfindungsgemäß durch die Lehre des Patentanspruchs 1 bzw. 11 gelöst, wobei in den weiteren Patentansprüchen die Lösung in vorteilhafter Weise weiterentwickelnde Merkmale aufgeführt sind.

Auf diese Weise wird ein Lagerschild geschaffen, der keine oder nahezu keine Anpassung des Mähtellers benötigt und der so geschaffen ist, daß Schmutz nicht notwendigerweise im Bereich der Schraube bzw. deren Mutter anhaftet. Die Öffnung in der Wandung macht es möglich, daß angelagerter Schmutz aufgrund der Zentrifugalkraft herausgeschleudert wird und somit den Bereich der Schraube und Mutter freihält. Das Formschlußmittel kann entweder extra vorgesehen werden oder sich aus einer Einfügung des Lagerschilds in die Struktur des Mähtellers selbst ergeben, z. B. kann er zwischen Rippen, Stegen, etc. auf dem Mähteller aufgenommen werden. Grundsätzlich kann das Formschlußmittel aber auch aus Nasen, Verzahnungen, Stegen, etc. gebildet werden.

Ein einfache Art eines Formschlußmittels wird in einem Zapfen, einem Ansatz, einem Vorsprung oder dergl, gesehen, die von dem Boden nach unten vorspringen und sich in eine Vertiefung oder Öffnung hinein erstrecken.

Wenn die Öffnung und das Formschlußmittel jeweils des Lagerschilds entlang dessen Längsmittenebene angeordnet sind, kann der zugehörige Mähteller einfach hergestellt werden, da sich die entsprechenden Öffnungen ebenfalls auf dessen Radialen erstrecken.

Während bei bekannten Lagerschilden das Mähgut mit aufgewirbeltem Schmutz frontal auf einen die Mutter umgebenden Rand auftrifft und dort erheblich Verschleiß und Kraftbedarf verursacht, sieht der weiterentwickelte Lagerschild eine geneigte Verschleißfläche vor, die das auftreffende Material ablenkt, was den Aufprall mindert.

Eine symmetrische Ausbildung des Lagerschilds um eine Längsmittenebene macht es möglich, den Lagerschild sowohl bei einem rechts- wie auch bei einem links drehenden Mähteller zu benutzen, da die Schneid- und Ablenkeigenschaften die gleichen sein werden.

Die endseitige Ausbildung des Lagerschilds im Bodenbereich analog der Form des Mähtellers hat den Vorteil, daß sich keine Kanten bilden, an denen Mähgut hängen bleiben könnte und die zu Verschleiß führen würden.

Ein zentrische bzw. konzentrische Anordnung der Wandung zu der Öffnung, durch die sich die Schraube erstreckt, vermeidet Nischen, in denen sich der Schmutz etc. festsetzen könnte. Vielmehr wird ein reibungsarmes Gleiten des Guts entlang der Wandung ermöglicht, so daß es von der Zentrifugalkraft heraus bewegt wird.

Indem die Wandung in ihrem Außenbereich mit schräg verlaufenden Verschleißflächen versehen wird, erfolgt eine Schonung der Wandung selbst und ein Ablenken des auftreffenden Guts zu der Mitte des Mähtellers, wo es von dem übrigen Stoffstrom erfaßt und mitgenommen wird.

Während der geneigte Außenbereich der Wandung gegebenenfalls mit den Verschleißflächen unter normalen Umständen eine ausreichende Ablenkung des auftreffenden Guts bewirkt, kann für große Stoffströme ein zusätzliches Leitelement vorgesehen werden, das dann eine größere Leitfläche enthält und bei einer Neigung schräg zu der Radialen des Mähtellers einen Teil des Stoffstroms nach innen lenkt, wo die Stromdichte nicht so hoch ist. Das Leitelement kann in verschiedener Weise, z. B. gerade, gekrümmt, steil oder flach und dergleichen ausgebildet sein. Die Neigung zu der Radial wird so gewählt, daß er radial außen liegende Bereich der Radialen voreilt, während der radial innenliegende Bereich der Radialen nacheilt.

Die Kraftmomente im Anschlußbereich des Leitelements an dem Mähteller werden gering gehalten, wenn mehrere Formschlußmittel vorgesehen sind, die einen Abstand zueinander aufweisen.

Der Herstellungsaufwand des Mähtellers wird minimiert, wenn für die Aufnahme der Schraube und des Formschlußmittels entweder nur ein einziges Langloch oder zwei dann runde Öffnungen benötigt werden, die jeweils z. B. durch einen einfachen Stanzvorgang eingebracht werden können. Die als Langloch ausgebildete Öffnung müßte so ausgebildet werden, daß nebeneinander die Schraube wie auch das Formschlußmittel Platz finden, wodurch ein Verdrehen des Lagerschilds auf dem Mähteller vermieden wird. Der Mähteller kann sowohl oval wie auch im wesentlichen dreieckig ausgebildet werden.

Mähteller mit einer länglichen bzw. ovalen Form, die zur Aufnahme zweier Mähmesser ausgebildet sind, stellen den am häufigsten benutzten Typ dar und sind daher an den meisten Mähmaschinen verwendbar. Die Anordnung der Öffnungen auf einer Diametralen sorgen für eine einfache Herstellung.

In der Zeichnung ist ein nachfolgend näher beschriebenes Ausführungsbeispiel der Erfindung dargestellt. Es zeigt:
- Fig. 1: einen Mähteller mit einem Lagerschild auf der rechten Seite und einem Lagerschild mit einem Gutleitelement auf der linken Seite in Draufsicht,
- Fig. 2: einen Ausschnitt des Mähtellers mit einer länglichen Öffnung in Draufsicht,
- Fig. 3: einen vertikalen Längsschnitt durch den Mähteller in Figur 1 entlang der Linie 3-3 und in der Blickrichtung der dazugehörigen Pfeile,
- Fig. 4: eine perspektivische Darstellung des Lagerschilds aus Figur 1,
- Fig. 5: eine Ansicht auf den Lagerschild in Figur 1 von rechts,
- Fig. 6: eine Ansicht auf die Unterseite des in Figur 5 gezeigten Lagerschilds und
- Fig. 7: eine Seitenansicht eines mit einem Gutleitelement kombinierten Lagerschilds gemäß Figur 1.

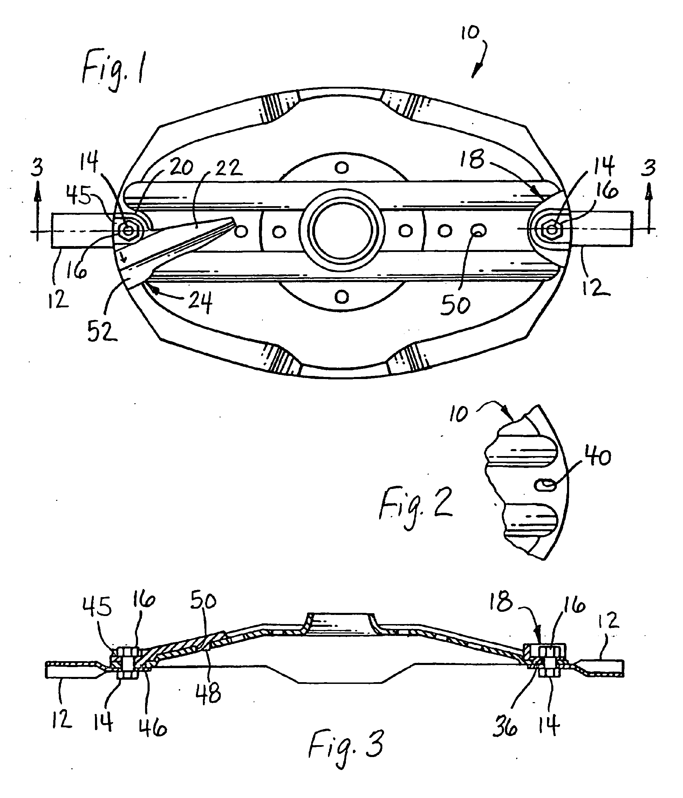

In den Figuren 1 bis 3 ist ein Mähteller 10 gezeigt, der so ausgebildet ist, daß er von Wellen angetrieben werden kann, die einen Teil eines Zahnradgetriebes in einem länglichen Getriebegehäuse bilden. Der Mähteller 10 besitzt in der Draufsicht eine ovale Form und weist Schneidmesser 12 auf, die an den gegenüberliegenden Endbereichen der Hauptachse des Mähtellers 10 mittels entsprechender Schrauben 14, auf denen Muttern 16 aufgenommen werden, angeschlossen sind.

Lediglich aus Gründen der Darstellung ist die Mutter 16 der Schraube 14 für das Schneidmesser 12, das an der rechten Seite des Mähtellers 10 gezeigt ist, in einem Lagerschild 18 für das Schneidmesser 12 aufgenommen, das frei ist von jeglichem weiteren Aufbau, während die Mutter 16 der Schraube 14 für das Schneidmesser 12, das auf der linken Seite des Mähtellers 10 gezeigt ist, in einem Lagerschildteil 20 aufgenommen ist, der mit einem Gutleitelement 22 verbunden ist, um einen einteiligen als Schild- und Leitzusammenbau ausgebildeten Lagerschild 24 zu bilden. Dies ist so zu verstehen, daß normalerweise zwei Lagerschilde 18 oder zwei als einteilige Schild- und Leitzusammenbauten ausgebildete Lagerschilde 24 benutzt würden.

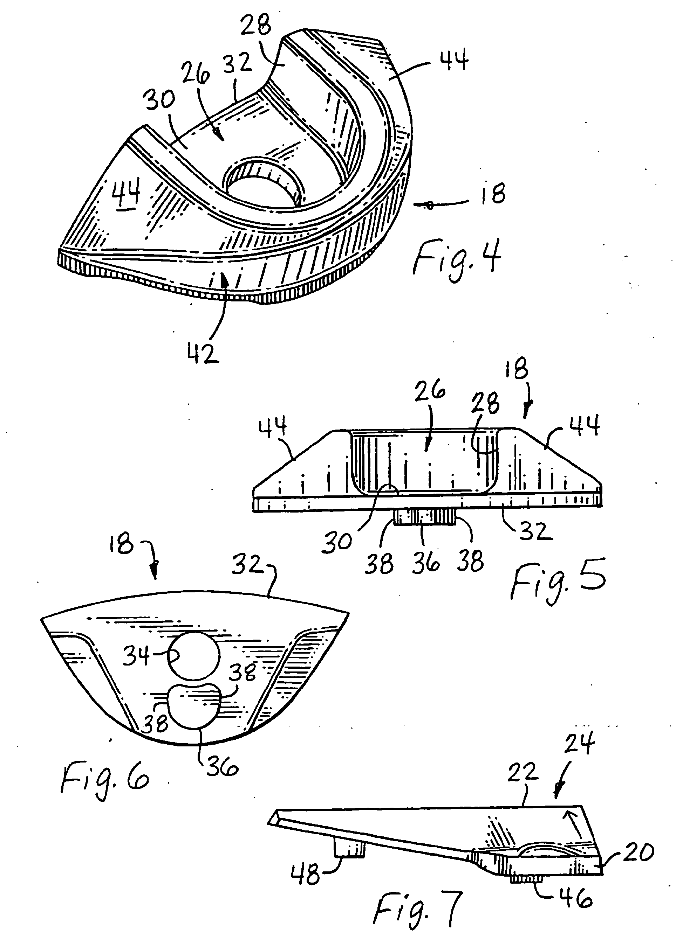

Der Lagerschild 18 wird aus einem Guß oder Druck hergestellt, der symmetrisch um eine vertikale Ebene ausgebildet ist, die in Figur 1 entlang der Schnittlinie 3-3 verläuft. Es ist daher zu erkennen, daß der Lagerschild 18 insofern universell ist, als er ungeachtet der Arbeitsdrehrichtung des Mähtellers 10 benutzt werden kann. Aus den Figuren 4 bis 6 ist zusätzlich zu entnehmen, daß der Lagerschild 18 eine Grube oder Ausnehmung 26 enthält, die von einer aufrechten, U-förmigen Wandung 28 gebildet wird, die an einen horizontal verlaufenden Boden 30 angreift. Wenn der Lagerschild 18 zum Betrieb an den Mähteller 10 angebracht ist, befindet sich der offene Bereich der Wandung 28 an dem radial außen liegenden Teil des Mähtellers 10 und endet an einer radial außen liegenden Oberfläche 32, die auf einem Radius verläuft, der im wesentlichen gleich dem der gegenüberliegenden Endbereiche des Mähtellers 10 ist, die die Drehachse des Mähtellers 10 als ihren Mittelpunkt haben. Der Boden 30 enthält eine kreisförmige Öffnung 34, die sich auf der Symmetrieebene des Lagerschilds 18 befindet, um eine Schraube 14 aufzunehmen, deren Mutter 16 sich in einer mittigen Stellung der Ausnehmung 26 befindet. Das geschlossene Ende der Wandung 28, d. h. der Boden des "U", ist auf einem Radius um die Mitte der Öffnung 34 gebildet. Außerhalb der Öffnung 34 befindet sich an dem Boden 30 der Ausnehmung 26 ein insbesondere als Ansatz oder Zapfen ausgebildetes Formschlußmittel 36 mit sich gegenüberliegenden flachen Seiten 38, die parallel zu der Symmetrieebene des Lagerschilds 18 verlaufen und sich auf gegenüberliegenden Seiten von ihr befinden. Öffnungen 40 (Fig. 2) zum Befestigen der Schneidmesser 12 sind an sich diametral gegenüberliegenden Stellen in Randbereichen entlang der Hauptachse des Mähtellers 10 vorgesehen, und diese Öffnungen 40 dehnen sich entlang dieser Achse aus, so daß jede in der Lage ist, sowohl jeweils die Schraube 14 als auch das Formschlußmittel 36 des zugehörigen Lagerschilds 18 zueinander benachbart aufzunehmen. Demzufolge liegen die Seiten 38 des Formschlußmittels 36 an gegenüberliegenden Seiten der sich längs erstreckenden Öffnung 40 an, um so den Lagerschild 18 für den Betrieb ordnungsgemäß zu positionieren. Offensichtlich könnte das Formschlußmittel 36 auch an einer anderen Stelle des Bodens 30 des Lagerschilds 18 und eine getrennte Öffnung 40 in dem Mähteller 10 vorgesehen werden, um das Formschlußmittel 36 aufzunehmen, damit dieser den Lagerschild 18 ordnungsgemäß positionieren kann. In diesem Fall würde die Öffnung kreisförmig, d. h. rund, ausgebildet werden.

In Figur 4 ist zu sehen, daß der Lagerschild 18 eine Verschleißfläche 42 aufweist, die sich um die Peripherie der Ausnehmung 26 erstreckt. Die Verschleißfläche 42 enthält identische geneigte Bereiche 44, von denen ein oberer Bereich der Oberseite des Lagerschilds 18 nahekommt, und ein Bodenbereich von der gebogenen Oberfläche 32 des Lagerschilds 18 zu der Oberseite an dem geschlossenen Ende der Ausnehmung 26 konvergiert. Da der Lagerschild 18 symmetrisch um eine zwischen den Schenkeln der U-förmigen Ausnehmung 26 verlaufende vertikale Ebene ausgebildet ist, kann der Lagerschild 18 zusammen mit jedem Mähteller 10 verwendet werden, und zwar unabhängig von der Arbeitsdrehrichtung, der der Mähteller 10 während des Betriebs unterzogen wird. Abhängig von der Drehrichtung des Mähtellers 10 eilt der eine oder andere geneigte Bereich 44 dem Schneidmesser 12 vor und wirkt zum Abweisen oder Leiten von Gut über den Mähteller 10. Die geneigten Bereiche 44 der Verschleißfläche 42 haben eine längere Standzeit des Lagerschilds 18 zum Ergebnis, da Stoßbeanspruchungen weniger werden, als wenn sie gegen eine aufrechte Oberfläche gerichtet wären, wie dies bei Ausführungen im Stand der Technik der Fall ist.

Wenn es gewünscht wird, Gut aggressiver abzulenken oder zu leiten, als dies mit der Verschleißfläche 42 des Lagerschilds 18 möglich ist, kann der Mähteller 10 mit dem integrierten Lagerschild 24 ausgerüstet werden. Wie dies in Figur 1 gezeigt ist, ist der Lagerschild 24 zum Gebrauch mit einem Mähteller 10 ausgebildet, der entgegen dem Uhrzeigerdrehsinn gedreht wird. In Bezug auf diese Drehrichtung des Mähtellers 10 eilt das Gutleitelement 22 des Lagerschilds 24 dem Schneidmesser 12 vor und erstreckt sich radial geringfügig nach innen über einen Punkt hinaus, an dem er von einer Radialen geschnitten wird, die durch die Schraube 14 und die Drehachse des Mähtellers 10 verläuft. Der Lagerschildteil 20 läuft dem radial außenliegenden Ende des Gutleitelements 22 nach und der Lagerschildteil 20 enthält wie der Lagerschild 18 eine Ausnehmung 45, die sich mit Bezug auf die Drehachse des Mähtellers 10 nach außen radial öffnet. Mit einem weiteren Bezug auf Figur 7 ist zu erkennen, daß wie bei dem Lagerschild 18 der Lageschildteil 20 des Lagerschilds 24 mit einem in gleicher Weise wie das Formschlußmittel 36 ausgebildeten Formschlußmittel 46 versehen ist, das in eine längliche Öffnung 40 des Mähtellers 10 eindringt, und zwar ausgehend von der Schraube 14 in radialer Richtung nach innen gerichtet und dieser benachbart, um so den Lagerschild 24 für den Betrieb ordnungsgemäß zu positionieren. An der Unterseite des Gutleitelements 22 ist ein zusätzliches Formschlußmittel 48 vorgesehen, und zwar an einer Stelle, die radial an dem Formschlußmittel 46 ausgerichtet ist, wenn der Lagerschild 24 wie in den Figuren 1 und 3 gezeigt, an dem Mähteller 10 angebracht ist, wobei das Formschlußmittel 48 in einer Öffnung 50 in dem Mähteller 10 aufgenommen ist. Das Gutleitelement 22 weist eine voreilende Oberfläche 52 auf, die von der Drehrichtung weg nach oben geneigt ist, und diese Oberfläche 52 leitet sowohl Gut als daß sie auch Schutz für den Lagerschildteil 20 des integrierten Lagerschilds 24 bietet.

Es ist zu erkennen, daß sowohl der Lagerschild 18 als auch der Lagerschild 24 derart arbeiten, daß Gut und anderes Material mittels der Zentrifugalkraft von den jeweiligen Ausnehmungen 26 und 45 weg bewegt werden und so die Ausnehmungen 26, 45 frei von jedem Gut oder anderem Material belassen, das beim Entfernen der Mutter 16 von der Schraube 14 hinderlich sein könnte. Weiterhin dienen die jeweiligen Ansätze 36, 46 und 48 zur ordnungsgemäßen Positionierung des Lagerschilds 18 und des Lagerschilds 24 auf dem Mähteller 10, während sie den Lagerschild 18 und den Lagerschild 24 von einer Drehbewegung während des Einsatzes und der Entnahme der Schraube 14 abhalten.

## Patentansprüche

1. Lagerschild (18, 24) eines Mähtellers (10) mit einem Boden (30) und einer mit diesem verbundenen aufrechten Wandung (28), wobei der Boden (30) eine Öffnung (34) zur Aufnahme einer Schraube (14) aufweist und die Wandung (28) eine Ausnehmung (26) begrenzt, **dadurch gekennzeichnet, daß** die Ausnehmung (26) an einer Stelle nicht von der Wandung (28) umschlossen ist und wenigstens ein Formschlußmittel (36, 46, 48) vorgesehen ist, das einer Lagefixierung des Lagerschilds (18) auf dem Mähteller (10) dient.

2. Lagerschild nach Anspruch 1, **dadurch gekennzeichnet, daß** das Formschlußmittel (36, 46, 48) als ein von dem Boden (30) abstehender Zapfen oder Ansatz ausgebildet ist.

3. Lagerschild nach Anspruch 1 oder 2, **dadurch gekennzeichnet, daß** die Öffnung (34) und das Formschlußmittel (36, 46, 48) entlang einer Längsmittenebene des Lagerschilds (18) angeordnet sind.

4. Lagerschild nach einem oder mehreren der vorherigen Ansprüche, **gekennzeichnet durch** eine Verschleißfläche (42), die in wenigstens einer beabsichtigten Drehrichtung des Mähtellers (10) voreilt und ansteigend verläuft.

5. Lagerschild nach einem oder mehreren der vorherigen Ansprüche, **dadurch gekennzeichnet, daß** er um eine Längsmittenebene symmetrisch ausgebildet ist.

6. Lagerschild nach einem oder mehreren der -vorherigen Ansprüche, **dadurch gekennzeichnet, daß** der Boden (30) im Bereich der unterbrochenen Wandung (28) in einer Form, insbesondere in einem Radius, ausläuft, die der Form des Mähtellers (10) in dem Befestigungsbereich entspricht.

7. Lagerschild nach einem oder mehreren der vorherigen Ansprüche, **dadurch gekennzeichnet, daß** seine Wandung (28) und insbesondere deren innere Wandung, zentrisch um die Öffnung (34) angeordnet ist.

8. Lagerschild nach einem oder mehreren der vorherigen Ansprüche, **dadurch gekennzeichnet, daß** an der Wandung (28) ausgebildete Verschleißflächen (42) ausgehend von dem Boden (30) zu einer mittig gelegenen Stelle ansteigend verlaufen.

9. Lagerschild nach einem oder mehreren der vorherigen Ansprüche, **dadurch gekennzeichnet, daß** er mit einem Gutleitelement (22) versehen ist, dessen Längsachse eine Radiale des Mähtellers (10) schneidet.

10. Lagerschild nach einem oder mehreren der vorherigen Ansprüche, insbesondere nach Anspruch 9, **dadurch gekennzeichnet, daß** er an seiner Unterseite mit zwei Formschlußmitteln (46, 48) versehen ist.

11. Mähteller (10) zur Aufnahme eines Lagerschilds (18, 24) nach einem oder mehreren der vorherigen Ansprüche, **gekennzeichnet durch** wenigstens eine länglich ausgeführte Öffnung (40) zur Aufnahme der Schraube (14) und eines Formschlußmittels (36, 46) oder zweier Öffnungen zur Aufnahme wenigstens der Schraube (14) einerseits und eines Formschlußmittels (46, 48) andererseits.

12. Mähteller nach Anspruch 11, **dadurch gekennzeichnet, daß** er zur Aufnahme wenigstens zweier diametral gegenüberliegender Lagerschilde (18, 24) ausgebildet ist, wobei die Öffnungen (40) zur Aufnahme der Schrauben (14) und der Formschlußmittel (36, 46) auf einer Diametralen liegen.

## Claims

1. A bearing shield (18, 24) of a mower disc (10), with a bottom (30) and an upright wall (28) connected thereto, wherein the bottom (30) has an opening (34) for receiving a screw (14) and the wall (28) bounds a recess (26), **characterized in that** the recess (26) is not enclosed by the wall (28) at one place and at least one positively engaging means (36, 46, 48) is provided, serving to fix the position of the bearing shield (18) on the mower disc (10).

2. A bearing shield according to claim 1, **characterized in that** the positively engaging means (36, 46, 48) is in the form of a lug or projection sticking out from the bottom (30).

3. A bearing shield according to claim 1 or 2, **characterized in that** the opening (34) and the positively engaging means (36, 46, 48) are disposed along a longitudinal middle plane of the bearing shield (18).

4. A bearing shield according to one or more of the preceding claims, **characterized by** a wear surface (42) which runs ahead at least in an anticipated direction of rotation of the mower disc (10) and rises.

5. A bearing shield according to one or more of the preceding claims, **characterized in that** it is formed symmetrically about a longitudinal middle plane.

6. A bearing shield according to one or more of the preceding claims, **characterized in that** the bottom (30) runs out in the region of the interrupted wall (28) in a shape, in particular in a radius which corresponds to the shape of the mower disc (10) in the fixing region.

7. A bearing shield according to one or more of the preceding claims, **characterized in that** its wall (28) and in particular its inner wall is arranged centred about the opening (34).

8. A bearing shield according to one or more of the preceding claims, **characterized in that** wear surfaces (42) formed on the wall (28) rise from the bottom (30) to a centrally disposed point

9. A bearing shield according to one or more of the preceding claims, **characterized in that** it is provided with a crop guide element (22) whose longitudinal axis intersects a radial line of the mower disc (10).

10. A bearing shield according to one or more of the preceding claims, especially according to claim 9, **characterized in that** it is provided with two positively engaging means (46, 48) on its underside.

11. A mower disc (10) for reception of a bearing shield (18, 24) according to one or more of the preceding claims, **characterized by** at least one elongated opening (40) for receiving the screw (14) and a positively engaging means (36, 46) or two openings for receiving at least the screw (14) on the one hand and a positively engaging means (46, 48) on the other hand.

12. A mower disc (11) according to claim 10, **characterized in that** it is designed to receive at least two diametrically opposed bearing shields (18, 24), wherein the openings (40) for receiving the screws (14) and the positively engaging means (36, 46) lie on a diametral line.

## Revendications

1. Bouclier (18, 24) d'un disque de coupe (10) comportant un fond (30) et une paroi (28) montante, reliée à ce dernier, le fond (30) comportant un orifice (34) destiné à recevoir une vis (14) et la paroi (28) délimitant un évidement (26), **caractérisé en ce que** l'évidement (26) n'est pas entouré par la paroi (28) à un emplacement et il est prévu au moins un moyen d'assemblage par complémentarité de forme (36, 46, 48) qui est destiné à fixer en position le bouclier (18) sur le disque de coupe (10).

2. Bouclier selon la revendication 1, **caractérisé en ce que** le moyen d'assemblage par complémentarité de forme (36, 46, 48) est réalisé sous la forme d'un téton ou d'un talon en saillie sur le fond (30).

3. Bouclier selon la revendication 1 ou 2, **caractérisé en ce que** l'orifice (34) et le moyen d'assemblage par complémentarité de forme (36, 46, 48) sont agencés le long d'un plan médian longitudinal du bouclier (18).

4. Bouclier selon une ou plusieurs des revendications précédentes, **caractérisé par** une surface d'usure (42), qui est décalée en avant dans au moins un sens de rotation voulu du disque de coupe (10) et qui s'étend en pente croissante.

5. Bouclier selon une ou plusieurs des revendications précédentes, **caractérisé en ce qu'**il est réalisé symétriquement autour d'un plan médian longitudinal.

6. Bouclier selon une ou plusieurs des revendications précédentes, **caractérisé en ce que** le fond (30), dans la zone de la paroi (28) interrompue, se termine selon une forme, en particulier selon un rayon, qui correspond à la forme du disque de coupe (10) dans la zone de fixation.

7. Bouclier selon une ou plusieurs des revendications précédentes, **caractérisé en ce que** sa paroi (28), et en particulier la face intérieure de celle-ci, est agencée en étant centrée autour de l'orifice (34).

8. Bouclier selon une ou plusieurs des revendications précédentes, **caractérisé en ce que** des surfaces d'usure (42), réalisées sur la paroi (28), s'étendent en pente croissante à partir du fond (30) vers une zone située au milieu.

9. Bouclier selon une ou plusieurs des revendications précédentes, **caractérisé en ce qu'**elle est munie d'un élément de guidage des produits (22), dont l'axe longitudinal coupe une ligne radiale du disque de coupe (10).

10. Bouclier selon une ou plusieurs des revendications précédentes, en particulier selon la revendication 9, **caractérisé en ce que**, sur sa face inférieure, elle est munie de deux moyens d'assemblage par complémentarité de forme (46, 48).

11. Disque de coupe (10) destiné à recevoir un bouclier (18, 24) selon une ou plusieurs des revendications précédentes, **caractérisé par** au moins un orifice (40) oblong destiné à recevoir la vis (14) et un moyen d'assemblage par complémentarité de forme (36, 46) ou deux orifices destinés à recevoir au moins la vis (14), d'une part, et un moyen d'assemblage par complémentarité de forme (46, 48), d'autre part.

12. Disque de coupe selon la revendication 11, **caractérisé en ce qu'**il est réalisé pour recevoir au moins deux boucliers (18, 24) diamétralement opposés, les orifices (40) destinés à recevoir les vis (14) et les moyens d'assemblage par complémentarité de forme (36, 46) étant disposés sur une ligne diamétrale.
